# EUROPEAN PATENT SPECIFICATION

(11) **EP 3 525 648 B1**
(45) Date of publication and mention of the grant of the patent: **11.11.2020**
(21) Application number: 17787554.9
(22) Date of filing: 12.10.2017
(51) Int. Cl.: A47L 9/00, A47L 5/26, A47L 9/22

(54) **HAND HELD SURFACE CLEANING APPARATUS**
HANDGEHALTENES OBERFLÄCHENREINIGUNGSGERÄT
APPAREIL PORTATIF DE NETTOYAGE DE SURFACES

(30) Priority: 14.10.2016 GB 201617522
(43) Date of publication of application: 21.08.2019
(73) Proprietor: TTI (Macao Commercial Offshore) Limited, Macao (MO)
(72) Inventor: WARD, Matthew James, Birmingham West Midlands B4 6BN (GB); ROGERS, Steven James, Birmingham West Midlands B4 6BN (GB); NEWSOM, Guy Lawrence, Birmingham West Midlands B4 6BN (GB); HOLMES, Darren David, Birmingham West Midlands B4 6BN (GB); WATERS, Richard David, Birmingham West Midlands B4 6BN (GB)
(74) Representative: Forresters IP LLP
(86) International application number: PCT/GB2017/053076
(87) International publication number: WO 2018/069703

(56) References cited:
- WO-A1-2015/032152
- WO-A1-2015/132546
- CN-Y- 201 230 860

## Description

This invention relates to a surface cleaning apparatus.

WO2015/132546 describes a suction cleaner in which air passing through a chamber in the motor housing is made to change direction so as to reduce the noise output. CN201230860Y describes a cleaner having a motor, in which a silencing structure is provided between the motor and an outlet.

According to an aspect of the invention, we provide a handheld surface cleaning apparatus including:
a housing supporting:
   a suction source including a motor with an axle which rotates a fan; and
   a dirt collection container,
wherein the motor is positioned within a motor chamber, and wherein the motor chamber is positioned within a further chamber, and there being an opening in the motor chamber for permitting exhaust air to pass therefrom to the further chamber, wherein the housing includes an exhaust outlet on an underside of the housing,
and characterised in that air from the motor chamber passes to the exhaust outlet around opposing sides of the motor chamber, and through an air diffusing member that is connected to the motor chamber and to an internal wall of the housing, and the housing being connected to or including a handle for holding the apparatus, such that in use the air passes upwardly through the opening in the motor chamber, and exits downwardly from the exhaust outlet of the apparatus.

Further features of the invention are set out in the appended claims.

Embodiments of the invention will be set out below by way of example only with reference to the accompanying figures, of which:

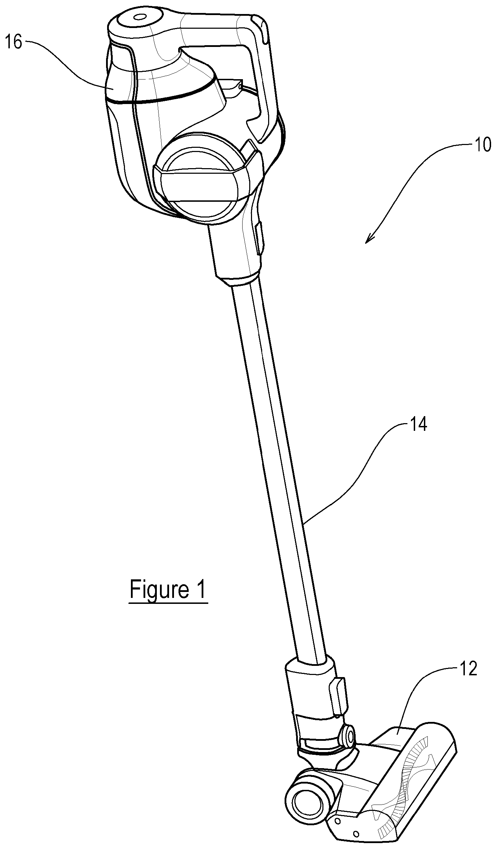

Figure 1 is a perspective view of a surface cleaning apparatus;

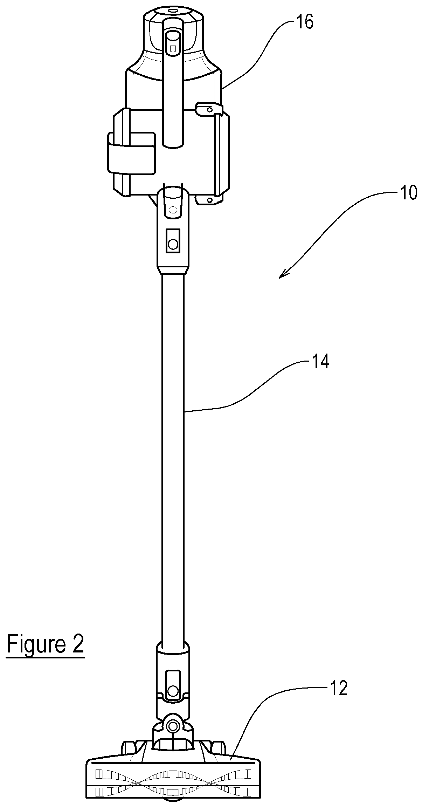

Figure 2 is a front view of the apparatus of figure 1;

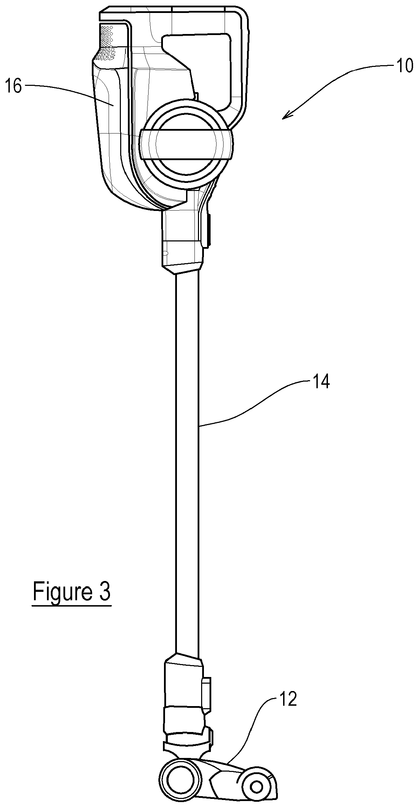

Figure 3 is a side view of the apparatus figure 1;

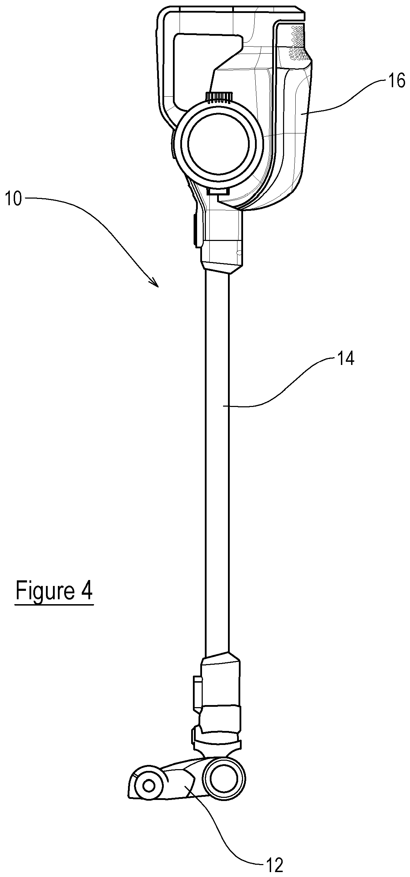

Figure 4 is an opposite side view of the apparatus figure 1;

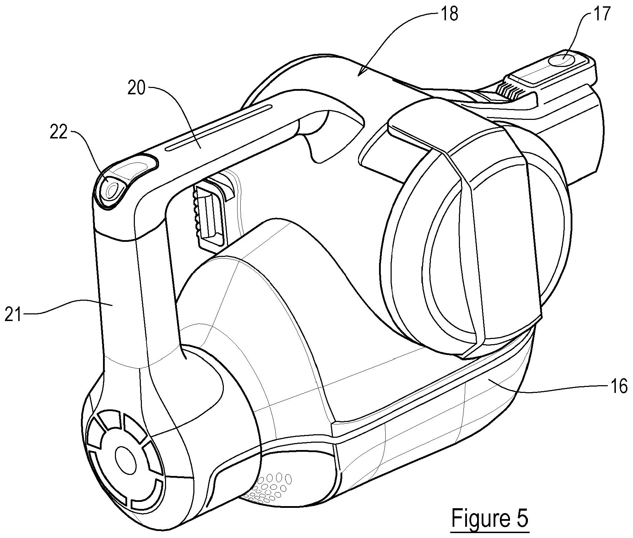

Figure 5 is a perspective view of a housing of the apparatus of figure 1, which housing is operable as a handheld surface cleaning apparatus;

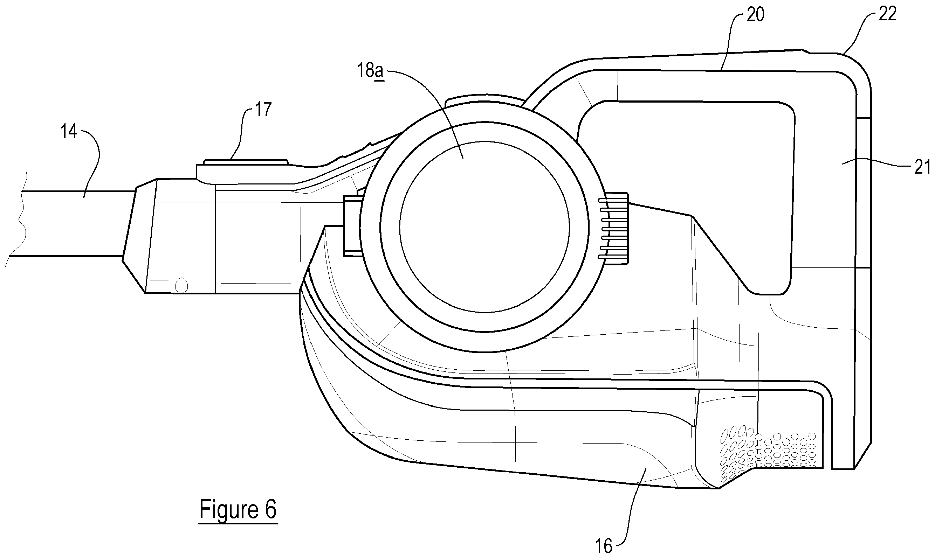

Figure 6 is a side view of the housing of figure 5;

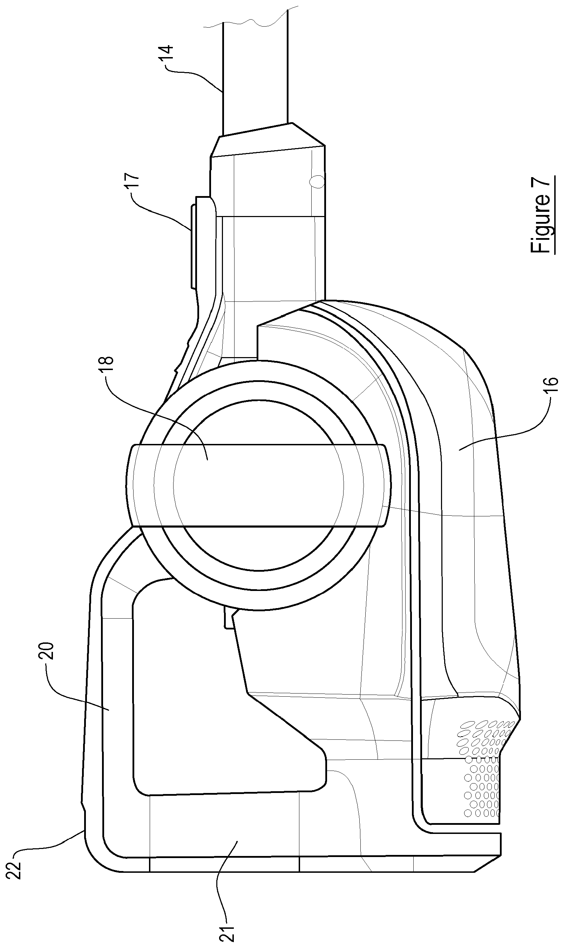

Figure 7 is an opposite side view of the housing of figure 5;

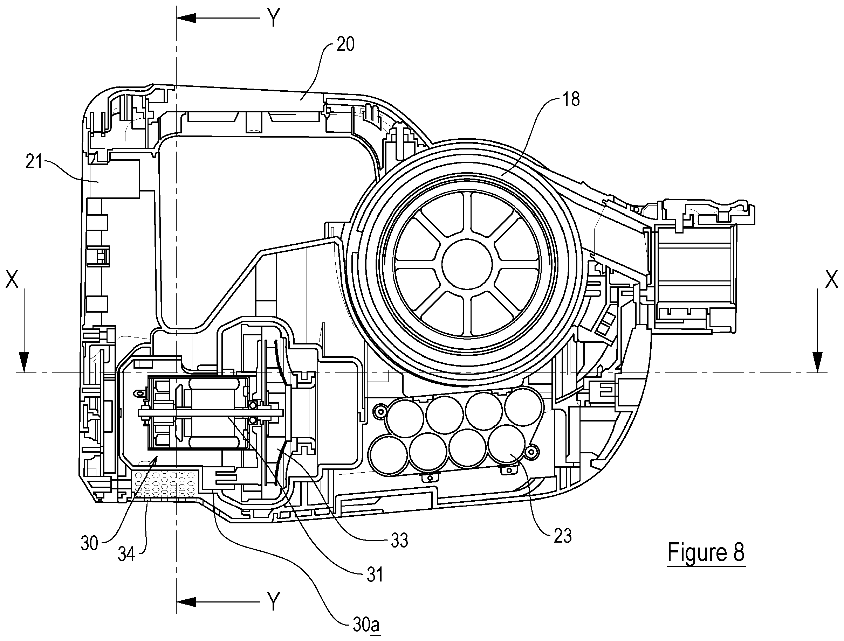

Figure 8 is a side cross-sectional view of the housing;

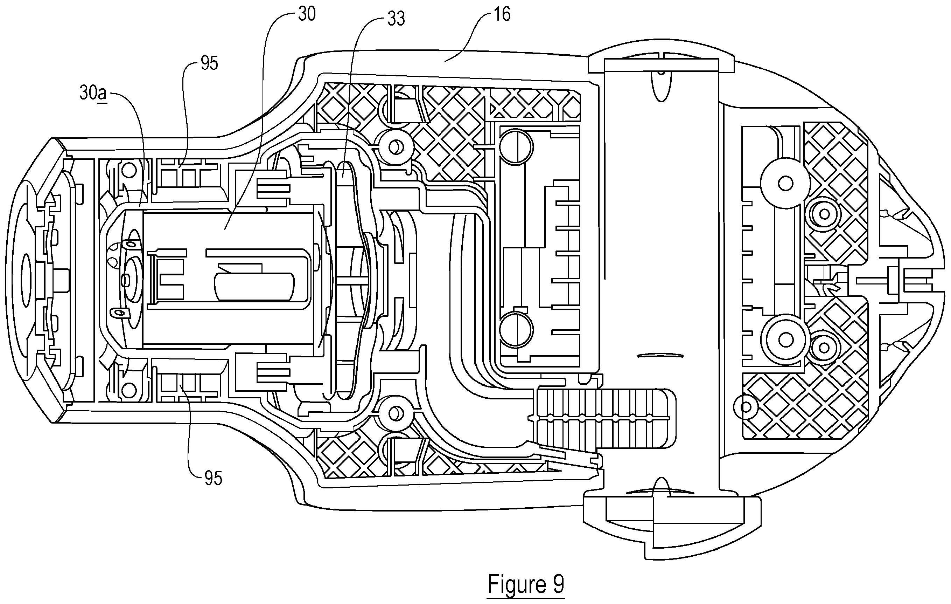

Figure 9 is a plan cross-sectional view of the housing through the plane X-X as shown in figure 8;
Figure 10 is an end cross-sectional view of the housing through the plane Y-Y as shown in figure 8;
Figure 11 is a perspective cross-sectional view of the housing through the plane Y-Y as shown in figure 8; and
Figure 12 is a plan view of a motor chamber within the housing.

Referring to the figures, these show a surface cleaning apparatus 10 in accordance with the present invention. The apparatus 10 includes a floor head 12, a housing 16 and an elongate member 14 connecting the floor head 12 to the housing 16. The housing 16 in this example is operable as a handheld surface cleaning apparatus, commonly known as a hand vac, when the elongate member 14 and floor head 12 are not connected thereto. The housing 16 supports a suction source, a dirt container 18 and a cyclonic separator. In this example the suction source is an electric motor driving a rotatable fan, but any appropriate suction source may be used. All that is necessary is for the suction source to be able to draw air through the floor head 12 and elongate member 14 towards the dirt collection container.

In this example the housing 16 supports or contains a battery 23 to provide electrical power to the suction motor and other components of the apparatus 10. In alternative embodiments, the apparatus 10 may be mains powered.

Whilst in the present embodiment the apparatus 10 includes a cyclonic separator to separate dirt from the air flowing through the apparatus 10, this is not essential. Indeed, embodiments are envisaged where the apparatus 10 includes a filter bag which collects dirt, or any other appropriate device to separate the dirt from the air. The apparatus 10 includes a pivotally moveable door 18a which enables a user to empty dirt collected within the container 18.

The elongate member 14 includes a passage for carrying dirt-laden air from the floor head 12 to the dirt collection container 18. In this example the floor head 12 includes a motor for driving a rotatable floor agitating member or brush, so the elongate member 14 includes a further passage through which electrical cables may extend to provide an electric connection between the housing 16 and the motor in the floor head.

The floor head 12 is disconnectable from the elongate member 14, so that, for example, another tool can be connected to the free end of the elongate member 14. The elongate member 14 is also disconnectable from the housing 16, by way of a manually operated switch 17. This enables the housing 16 to be used as handheld surface cleaning apparatus, with the option of being able to connect another tool to the location from where the elongate member 16 is removed.

The housing 16 includes a handle for holding the apparatus 10, said handle including first 20 and second 21 user-graspable portions which are connected to each other substantially at right-angles. A first end of the first user-graspable portion 20 is connected to the housing 16 and extends generally rearwardly away therefrom and from the elongate member 14. A first end of the second user-graspable portion 21 is connected to the housing 16 and extends generally upwardly therefrom. Respective second ends of the first 20 and second 21 user-graspable portions are connected to each other. Essentially, the first 20 and second 21 user-graspable portions form a handle which is L-shaped and which provides two locations each of which is sized such that it can be grasped fully by a hand of a user. A device 22, e.g. a switch, for turning the apparatus "on" is positioned at the connection of the second ends of the first 20 and second 21 user-graspable portions to each other.

In the present embodiment, the dirt collection container 18 is generally cylindrical and has an elongate axis A. Within the dirt collection container 18 is positioned a cyclonic separation device which also has an elongate axis coaxial with the axis A, the axis A being that about which dirt-laden air is caused to rotate as it passes through the apparatus 10. The elongate axis A is substantially horizontal in normal use. Whilst in this embodiment the elongate axes of the dirt collection container 18 and the cyclonic separation device are coaxial or substantially coaxial, they need not be. They could, for example, be parallel and offset from each other or inclined relative to each other.

As can be seen from the figures, the housing 16 supports a suction source in the form of an electric motor 30 with an axle 31 which is connected at one end to a fan 33. The axle 31 and fan 33 rotate about an axis. The motor 30 may be any appropriate motor, e.g. DC, AC, brushless. Motor exhaust air apertures 34 are provided in the housing 16 such that when the apparatus is held in an in use position, air from the exhaust outlet exits downwardly from the apparatus 10. The motor 30 is positioned within a motor chamber 30a. The motor 30, axle 31 and fan 33 are positioned such that they are central of the housing 16.

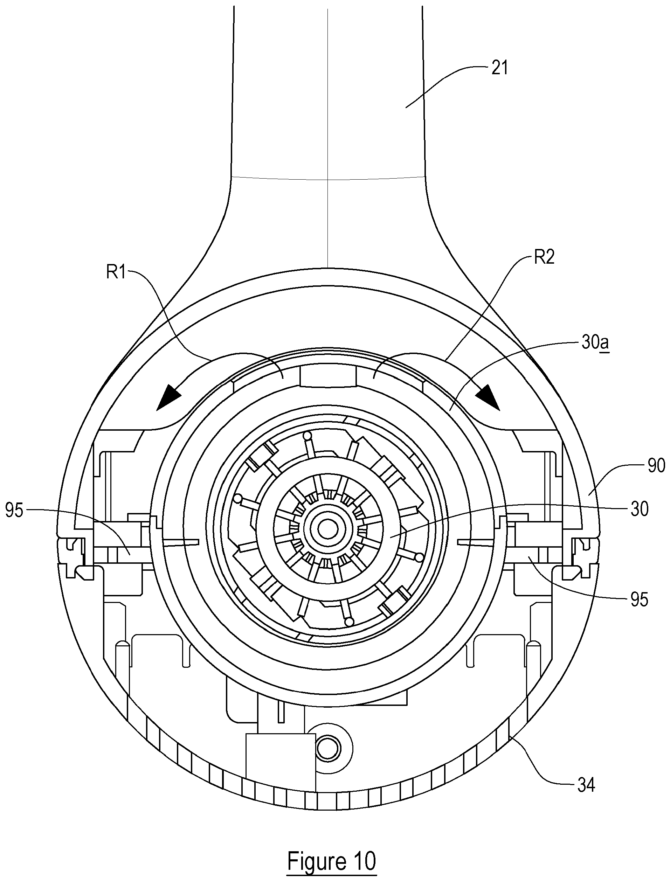

As can be seen from figures 10, 11 and 12, the motor chamber 30a is positioned within a further, substantially cylindrical, chamber 90, which in this example is formed by an outer wall of the housing 16 which extends around the motor chamber 30a. There is an opening 91 in the motor chamber 30a for permitting exhaust air to pass therefrom to the further chamber 90. The opening 91 in the motor chamber 30a is positioned such that air passing therethrough is directed upwardly (when the apparatus 10 is held in normal use).

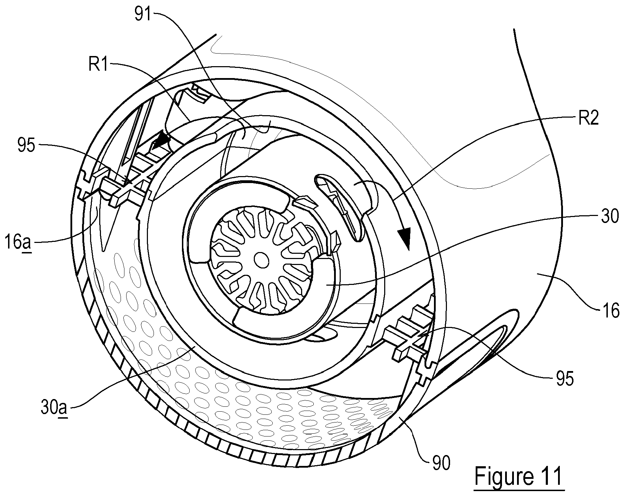

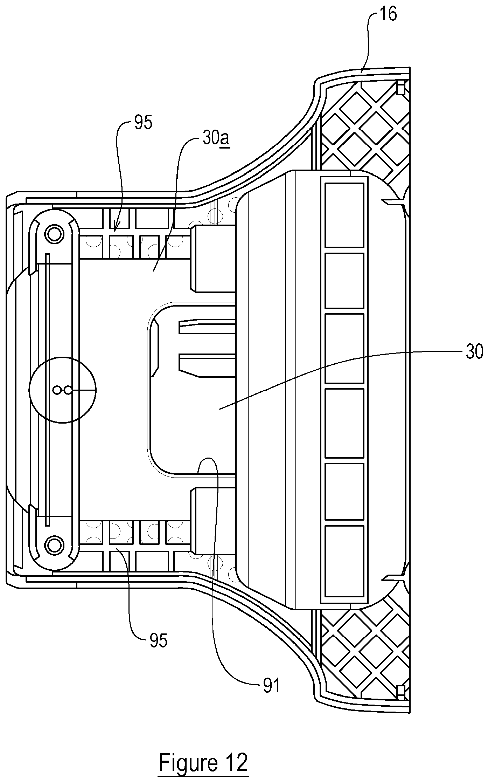

Advantageously, air from the motor chamber 30a passes to the apertures 34 around opposing sides of the motor chamber 30a (see arrows R1 and R2 in figures 11 and 12). Such a splitting of the exhaust air reduces the noise emitted from the apparatus 10 in use.

Advantageously, the apparatus includes a pair of air diffusing members 95 which are positioned in the airflow between the opening 91 and the apertures 34. It should be appreciated that embodiments are envisaged with one or more than two air diffusing members. The air diffusing members 96 diffuse and disrupt the flow of air to reduce the noise emitted from the apparatus 10. In this example, each air diffusing member 95 includes a plurality of apertures through which the air passes. The apertures are, in this example, rectangular and preferably square, although they may be other shapes. They are positioned in two or more rows which are preferably parallel with each other.

The air diffusing members 95 are connected to the motor chamber 30a, at diametrically opposing sides thereof, and to an internal wall 16a of the housing 16, and each extends substantially radially away from the axis of the axle 31 of the motor. When the apparatus 10 is held in an in use position, the air diffusing members 95 extend substantially horizontally away from the motor chamber 30a. The air diffusing members 95 therefore provide some support for the motor chamber 30a within the further chamber 90.

When used in this specification and claims, the terms "comprises" and "comprising" and variations thereof mean that the specified features, steps or integers are included. The terms are not to be interpreted to exclude the presence of other features, steps or components.

## Claims

1. A handheld surface cleaning apparatus (10) including:
a housing (16) supporting:
a suction source including a motor (30) with an axle (31) which rotates a fan (33); and
a dirt collection container (18),
wherein the motor is positioned within a motor chamber (30a), and wherein the motor chamber is positioned within a further chamber (90), and there being an opening (91) in the motor chamber for permitting exhaust air to pass therefrom to the further chamber (90), wherein the housing includes an exhaust outlet on an underside of the housing,
and **characterised in that** air from the motor chamber passes to the exhaust outlet (34) around opposing sides (R1, R2) of the motor chamber, and through an air diffusing member (95) that is connected to the motor chamber and to an internal wall (16a) of the housing, and the housing being connected to or including a handle for holding the apparatus, such that in use the air passes upwardly through the opening in the motor chamber, and exits downwardly from the exhaust outlet (34) of the apparatus.

2. An apparatus according to claim 1 wherein the air diffusing member includes a plurality of apertures through which the air passes.

3. An apparatus according to claim 2 wherein the apertures are rectangular.

4. An apparatus according to claim 2 or claim 3 wherein the apertures are positioned in two or more rows which are preferably parallel with each other.

5. An apparatus according to any preceding claim wherein the air diffusing member extends substantially radially away from an axis of the axle of the motor.

6. An apparatus according to any preceding claim, wherein when the apparatus is held in an in use position, the air diffusing member extends substantially horizontally away from the motor chamber.

7. An apparatus according to any preceding claim, wherein the apparatus includes a pair of said air diffusing members, with a portion of air from the motor chamber passing to the exhaust outlet through each of the air diffusing members.

8. An apparatus according to any preceding claim, wherein the air diffusing members are positioned at opposing sides of the motor chamber.

9. An apparatus according to claim 7 or claim 8 wherein the air diffusing members are diametrically opposed.

10. An apparatus according to any preceding claim wherein the exhaust outlet includes a plurality of apertures (34).

11. An apparatus according to any preceding claim, wherein the or each of the plurality of air diffusing members support(s) the motor chamber within the further chamber.

12. An apparatus according claim 11 wherein the further chamber is substantially cylindrical.

13. An apparatus according to any preceding claim wherein the opening in the motor chamber is positioned such that air passing therethrough is directed upwardly.

## Patentansprüche

1. Tragbare Oberflächenreinigungsvorrichtung (10), die Folgendes umfasst:
ein Gehäuse (16), das Folgendes trägt:
eine Saugquelle, die einen Motor (30) mit einer Achse (31) aufweist, der ein Gebläse (33) dreht; und
einen Schmutzsammelbehälter (18),
wobei der Motor in einer Motorkammer (30a) positioniert ist und wobei die Motorkammer in einer weiteren Kammer (90) positioniert ist und wobei es eine Öffnung (91) in der Motorkammer gibt, um es zu ermöglichen, dass die Abluft von dort zur weiteren Kammer (90) gelangt, wobei das Gehäuse einen Abluftauslass an einer Unterseite des Gehäuses aufweist,
und **dadurch gekennzeichnet, dass** Luft aus der Motorkammer zum Abluftauslass (34) um gegenüberliegende Seiten (R1, R2) der Motorkammer herum und durch ein Luftdiffusionselement (95) strömt, das mit der Motorkammer und einer Innenwand (16a) des Gehäuses verbunden ist, und wobei das Gehäuse mit einem Griff zum Halten der Vorrichtung verbunden ist oder einen solchen aufweist, so dass im Gebrauch die Luft nach oben durch die Öffnung in der Motorkammer strömt und nach unten aus dem Abluftauslass (34) der Vorrichtung austritt.

2. Vorrichtung nach Anspruch 1, bei der das Luftdiffusionselement mehrere Löcher aufweist, durch die die Luft strömt.

3. Vorrichtung nach Anspruch 2, bei der die Löcher rechteckig sind.

4. Vorrichtung nach Anspruch 2 oder 3, bei der die Löcher in zwei oder mehr Reihen angeordnet sind, die vorzugsweise parallel zueinander verlaufen.

5. Vorrichtung nach einem vorherigen Anspruch, bei der sich das Luftdiffusionselement im Wesentlichen radial von einer Achse der Motorachse weg erstreckt.

6. Vorrichtung nach einem vorherigen Anspruch, wobei sich das Luftdiffusionselement, wenn die Vorrichtung in einer Gebrauchsposition gehalten wird, im Wesentlichen horizontal von der Motorkammer weg erstreckt.

7. Vorrichtung nach einem vorherigen Anspruch, wobei die Vorrichtung ein Paar der genannten Luftdiffusionselemente enthält, wobei ein Teil der Luft aus der Motorkammer durch jedes der Luftdiffusionselemente zum Abluftauslass gelangt.

8. Vorrichtung nach einem der vorherigen Ansprüche, bei der die Luftdiffusionselemente an gegenüberliegenden Seiten der Motorkammer angeordnet sind.

9. Vorrichtung nach Anspruch 7 oder 8, bei der die Luftdiffusionselemente einander diametral gegenüberliegen.

10. Vorrichtung nach einem der vorherigen Ansprüche, bei der der Abluftauslass mehrere Löcher (34) aufweist.

11. Vorrichtung nach einem vorherigen Anspruch, wobei das oder jedes der mehreren Luftdiffusionselemente die Motorkammer in der weiteren Kammer trägt.

12. Vorrichtung nach Anspruch 11, wobei die weitere Kammer im Wesentlichen zylindrisch ist.

13. Vorrichtung nach einem vorherigen Anspruch, bei der die Öffnung in der Motorkammer so angeordnet ist, dass durch sie hindurchströmende Luft nach oben gerichtet ist.

## Revendications

1. Un appareil portatif de nettoyage de surface (10) comprenant :
un boîtier (16) portant :
une source d'aspiration comprenant un moteur (30) doté d'un axe (31) qui fait tourner un ventilateur (33) ; et
un récipient de collecte de saleté (18),
le moteur étant positionné à l'intérieur d'une chambre de moteur (30a), et la chambre de moteur étant positionnée à l'intérieur d'une autre chambre (90), et une ouverture (91) étant ménagée dans la chambre de moteur pour permettre à l'air d'échappement de passer de cette dernière à l'autre chambre (90),
le boîtier comportant une sortie d'échappement sur un dessous du boîtier,
et **caractérisé en ce que** l'air venant de la chambre de moteur passe à la sortie d'échappement (34) autour de côtés opposés (R1, R2) de la chambre de moteur, et à travers un organe diffuseur d'air (95) relié à la chambre de moteur et à une paroi interne (16a) du boîtier, et le boîtier est relié à ou comprend une poignée pour tenir l'appareil, de manière à ce que pendant l'utilisation l'air passe vers le haut à travers l'ouverture de la chambre de moteur, et sort vers le bas depuis la sortie d'échappement (34) de l'appareil.

2. Un appareil selon la revendication 1, dans lequel l'organe diffuseur d'air comprend une pluralité d'ouvertures à travers lesquelles l'air passe.

3. Un appareil selon la revendication 2, dans lequel les ouvertures sont rectangulaires.

4. Un appareil selon la revendication 2 ou la revendication 3, dans lequel les ouvertures sont positionnées en deux rangées ou plus qui sont de préférences parallèles l'une à l'autre.

5. Un appareil selon une quelconque revendication précédente, dans lequel l'organe diffuseur d'air s'étend sensiblement radialement à partir d'un axe de l'axe du moteur.

6. Un appareil selon une quelconque revendication précédente, dans lequel, quand l'appareil est tenu en position d'utilisation, l'organe diffuseur d'air s'étend sensiblement horizontalement à partir de la chambre de moteur.

7. Un appareil selon une quelconque revendication précédente, l'appareil comprenant une paire de dits organes diffuseurs d'air, avec une partie de l'air venant de la chambre de moteur passant à la sortie d'échappement à travers chacun des organes diffuseurs d'air.

8. Un appareil selon une quelconque revendication précédente, dans lequel les organes diffuseurs d'air sont positionnés sur des côtés opposés de la chambre de moteur.

9. Un appareil selon la revendication 7 ou la revendication 8, dans lequel les organes diffuseurs d'air sont diamétralement opposés.

10. Un appareil selon une quelconque revendication précédente, dans lequel la sortie d'échappement comprend une pluralité d'ouvertures (34).

11. Un appareil selon une quelconque revendication précédente, dans lequel le ou chacun de la pluralité d'organes diffuseurs d'air soutient la chambre de moteur à l'intérieur de l'autre chambre.

12. Un appareil selon la revendication 11, dans lequel l'autre chambre est sensiblement cylindrique.

13. Un appareil selon une quelconque revendication précédente, dans lequel l'ouverture de la chambre de moteur est positionnée de manière à ce que l'air la traversant soit dirigé vers le haut.
